(19) Europäisches Patentamt
European Patent Office
Office européen des brevets

(11) **EP 4 091 130 B1**

(12) **EUROPEAN PATENT SPECIFICATION**

(45) Date of publication and mention
of the grant of the patent:
**29.10.2025 Bulletin 2025/44**

(21) Application number: **21862237.1**

(22) Date of filing: **27.08.2021**

(51) International Patent Classification (IPC):
**G06T 5/20** *(2006.01)* **G06T 5/94** *(2024.01)*
**G06T 5/40** *(2006.01)*

(52) Cooperative Patent Classification (CPC):
**G06T 5/94; G06T 5/20; G06T 5/40; G06V 10/28;
G06V 10/443; G06V 10/50; G06V 10/7715;**
G06T 2207/20012

(86) International application number:
**PCT/TR2021/050869**

(87) International publication number:
**WO 2022/046016 (03.03.2022 Gazette 2022/09)**

(54) **VARIABLE CLIPPING LEVEL CALCULATION METHOD FOR CLAHE ALGORITHM**

BERECHNUNGSVERFAHREN MIT VARIABLER CLIPPING-EBENE FÜR EINEN
CLAHE-ALGORITHMUS

PROCÉDÉ DE CALCUL DE NIVEAU DE DÉCOUPAGE VARIABLE POUR ALGORITHME DE TYPE
CLAHE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **28.08.2020 TR 202013601**

(43) Date of publication of application:
**23.11.2022 Bulletin 2022/47**

(73) Proprietors:
• **Aselsan Elektronik Sanayi ve Ticaret Anonim
Sirketi
Ankara (TR)**
• **Istanbul Teknik Universitesi
34469 Istanbul (TR)**

(72) Inventor: **MAV , Muhammed Mehdi
Yenimahalle/Ankara (TR)**

(74) Representative: **Yamankaradeniz, Kemal
Destek Patent Inc.
Maslak Mah.
Büyükdere Cad., No: 243
Kat: 13, Spine Tower, Sariyer
34485 Istanbul (TR)**

(56) References cited:
CN-A- 107 481 202      US-A1- 2012 263 366
US-A1- 2016 189 354    US-A1- 2016 335 751
US-A1- 2017 041 543

• **GLUHCHEV G: "CONTRAST ENHANCEMENT OF
PORTAL IMAGES WITH ADAPTIVE HISTOGRAM
CLIP", ELEKTRIK, SCIENTIFIC AND TECHNICAL
RESEARCH COUNCIL OF TURKEY, ANKARA,
TR, vol. 5, no. 1, 1 January 1997 (1997-01-01),
pages 139 - 145, XP008005958, ISSN: 1300-0632**
• **ZHANG HONG ET AL: "Perceptual contrast
enhancement with dynamic range adjustment",
OPTIK, WISSENSCHAFTLICHE VERLAG GMBH,
DE, vol. 124, no. 23, 13 August 2013 (2013-08-13),
pages 5906 - 5913, XP028740967, ISSN:
0030-4026, DOI: 10.1016/J.IJLEO.2013.04.046**

## Description

### Technical field

The invention relates to a pixel-specific clipping level parameter calculation method for the real-time sliding window CLAHE (contrast-limited adaptive histogram equalization algorithm based on edge information around each pixel.

### State of the Art

Today, real-time sliding window CLAHE algorithm is used to increase the contrast of the image in infrared or daytime imaging. In CLAHE algorithm, the amount of contrast increase is determined by a parameter called the clipping level. In the traditional sliding window CLAHE algorithm, the clipping level is applied to each pixel of the image with the same value, and it is not possible to reduce the clipping level separately in different areas without edge information. For this reason, it is not possible to avoid noise amplification caused by unnecessary contrast increase in areas without edge information such as the sky.

In the current method, a separate region histogram is calculated for all pixels in the image. Region histograms calculated for each pixel are clipped from a fixed clipping level, and values clipped from the region histogram are redistributed to the entire region histogram. Then, the output value of the relevant pixel is determined by applying histogram equalization to all region histograms. In this technique, the computational complexity is quite high, but interpolation techniques are not needed. Using the same clipping level in the histogram calculated for each pixel may result in excessive noise enhancement as there will be extra enhancement in areas of the image where edge information is not available.

Patent application No. IN2986CHE2013A was found in the relevant searching. The application relates to automatic CLAHE method and system used for image enhancement. In the automatic CLAHE method mentioned in the said application, the clipping level is calculated automatically. The processing steps of the method according to the invention are as follows: dividing the image into subimages with the NxN matrix; calculating the histogram of each subimage and the peak value of the histogram; calculating the nominal clipping level with a limit from 0 to peak value using the binary search method; clipping the histogram to the nominal clipping level in case the peak of the histogram is higher than the nominal clipping level; summing the number of pixels causing the overshoot; evenly redistribution of the collected pixels over the entire histogram; applying histogram equalization to redistributed subimage histograms; gray level mapping for each pixel in the input image and applying the output mapping to each of the pixels in said input image to obtain the enhanced image. In the relevant application, it is mentioned that the clipping level of the image is automatically calculated, however, there is no mention of calculating a separate clipping level for each pixel and using a sobel filter to achieve this. In the relevant application, "sliding window CLAHE" method is also not used.

Patent application No. KR101684990B1 was found in the relevant searching. Application relates to a method that enhances the image contrast via CLAHE. The relevant method is used especially in the underwater target detection and includes the following processing steps: detecting the edges of a gray image originally corresponding to a color image with a four-way Sobel edge detector; conversion of color image from RGB domain to HSI domain with non-linear conversion; applying contrast enhancement on a luminance vector via the CLAHE algorithm; converting the optimized HSI back to RGB and applying constrained multiplication and converting the display range of R, G, B components from [0, 1] to [0, 255]. In the application, it is mentioned that the Sobel filter is used to detect the edges, however, the histogram value of the pixels within the detected edges cannot be calculated separately for each pixel.

Patent application No. CN107481202A was found in the relevant searching. The invention relates to display technology field, more particularly to a kind of method of dynamic range of images enhancing. The claims of the application is related to apply various enhancing algorithms based on a parameter calculated from the image. One of which is a CLAHE algorithm. It also defines a clip value that is used globally on the image. However, there is no existing system that provides an improvement on the Sliding Window CLAHE algorithm that can define a clip value for each pixel locally and also prevents this unwanted noise amplification by adjusting the local clip value used for the enhancement.

In conclusion, due to the problems mentioned above and the inadequacy of the existing solutions, it was necessary to make improvements in the relevant technical field.

### Objects of the invention

The object of the invention is to solve the above-mentioned disadvantages by being inspired by the current conditions.

The main purpose of the invention is to calculate the clipping level parameter specific to each pixel of the image based on the surrounding edge information in the real-time sliding window CLAHE algorithm.

Another purpose of the invention is to increase the contrast only in the areas where the detail (edge information) is present and to prevent the increase in the contrast In the undetailed areas of the image.

Another purpose of the invention is to prevent noise amplification by reducing the clipping level in areas where there is no detail in the image.

The structural and characteristic features of the present invention will be understood clearly by the following drawings and the detailed description made with reference to these drawings and therefore the evaluation shall be made by taking these figures and the detailed description into consideration.

## Description of Figures

**Figure 1** graphically shows the result of the histogram for the 129x129 sample window in the sliding window CLAHE algorithm according to the invention.

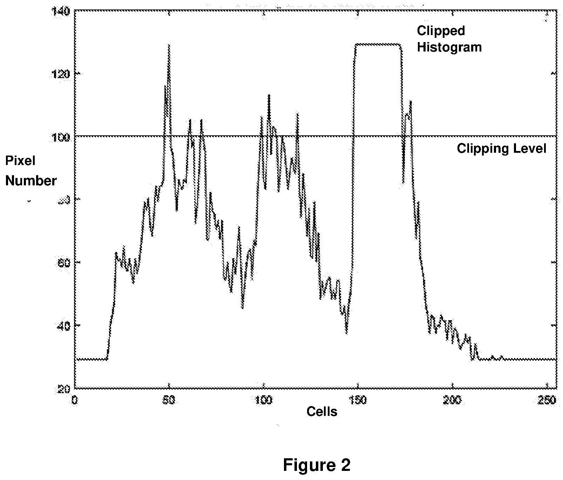

**Figure 2** graphically shows the histogram obtained by clipping the histogram shown in figure 1 from the calculated clipping level and redistributing the clipped values to the histogram.

**Figure 3** graphically shows the cumulative histogram obtained from the histogram shown in figure 2.

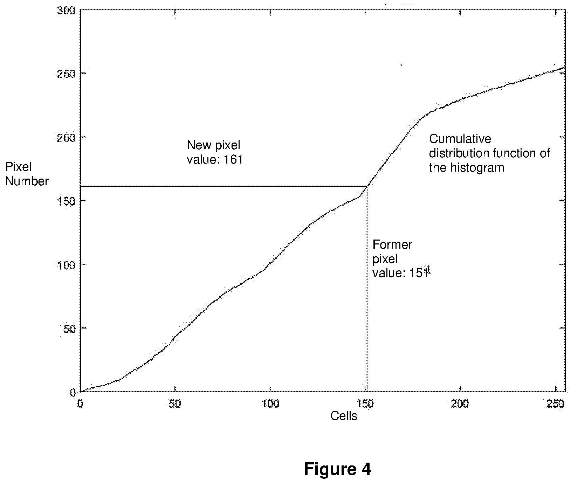

**Figure 4** graphically shows the transfer function, map showing what the output value of the relevant pixel will be, obtained after applying histogram equalization to the cumulative histogram shown in figure 3.

## Detailed Description of the Invention

This detailed description elaborates the preferred embodiments of the variable clipping level calculation method for the sliding window CLAHE algorithm according to the invention, for only a better understanding of the relevant subject.

Sliding window CLAHE is a method that provides contrast enhancement in the image by replacing the value of the image within the NxN size window around that pixel with the value calculated over the histogram for each pixel in the middle of a two-dimensional filter. N should be an odd number. Numbers greater than 33 and 33 are preferred in order to obtain significant results. In the exemplary application of the invention, 129 is preferred.

Histogram is a function that shows the distribution of pixel values found in an image. For example, if there are 10 pixels with 0 value in a window, the histogram shows the value 10 for the value 0. Pixels can take integer values between 0 and 255 in an 8-bit image, therefore, a histogram has 256 values. Histogram is generally graphically shown.

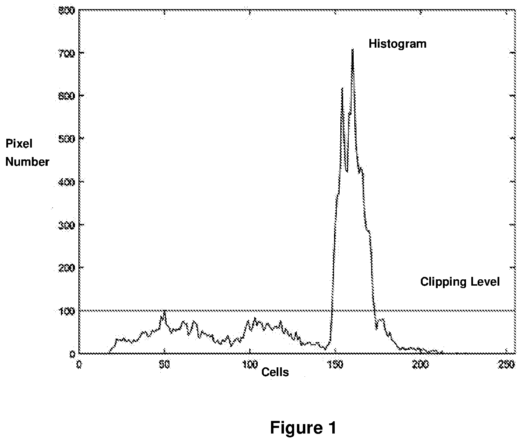

In the method according to the invention, firstly, the histogram of the pixels in the surrounding window is calculated for each pixel. Calculation process is provided by adding the histogram of the column entering the sliding window and subtracting the histogram of the column exiting the sliding window, for each pixel consecutively. In Figure 1, the result of the histogram calculation for the 129x129 sample window is graphically shown.

After calculating the histogram, the clipping level is calculated for each window separately. The following steps are used to calculate clipping levels:

In order to provide real-time contrast improvement, three parameters are defined by the user: edge threshold, minimum clip- $\mu$, and clip alpha $\alpha$-. Maximum clipping value is obtained by adding the clip alpha to minimum clip.

The image is preferably passed through a 9x9 sobel filter, thus obtaining high-frequency parts of the image, namely edge information. The sobel filter is the most common method used to obtain high frequency and edge information in image processing. Edge information can also be obtained with a different process.

A comparator compares the user-specified edge threshold with the high frequency obtained from the sobel filter. The high-frequency image obtained with the sobel filter as a result of the comparison is converted into a binary image consisting of 0 and 1. The conversion process facilitates the hardware implementation of the method according to the invention.

The total number of 1's in the NxN window around each pixel in the resulting binary image is calculated. This calculation is performed with a method similar to histogram calculation. First, the pixels in the columns entering and exiting the window are recorded as inputs and outputs. Then, the column totals (inputs) entering the sliding window are added to the current total, and the totals (outgoing) of the columns leaving the sliding window are subtracted from the current total, and the total number of 1's in the window is obtained therewith.

In the next process step, the total number of 1's obtained is proportioned to the number of pixels in this window. The value obtained as a result of this proportioning sets forth the edge density ($\gamma$) around that pixel. This process is elaborated with the following equation:

$$\gamma = \frac{total\ number\ of\ 1's\ in\ the\ window}{number\ of\ pixels\ in\ the\ window}$$

After calculating the edge density, the clipping level value is calculated by adding the minimum clipping value to the value obtained by expanding the clip alpha value determined by the user with the edge density. This process is elaborated with the following equation:

$$clipping\ level = a * \gamma + u$$

After the clipping level is determined by the abovementioned process steps, the parts that exceed the clipping level in the histogram are cut up to the clipping level, and the clipped pixels are equally redistributed to each element of the histogram.

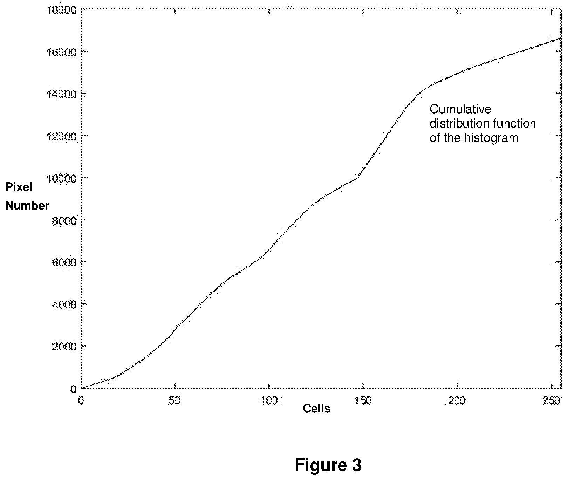

The cumulative distribution of the clipped and redistributed histogram is calculated after the clipping process. In Figure 3, the cumulative histogram of the redistributed histogram is graphically shown.

Finally, the ratio of the cumulative histogram to the number of pixels in the window is obtained and this ratio is expanded with the maximum pixel value (255 for 8-bit image). This newly obtained value represents the transfer function. In this transfer function, the new pixel value corresponding to the processed pixel value is obtained. Obtaining new pixel values for each pixel is elaborated by the following equation:

$$I'[x][y] = \sum_{i \leq I[x][y]} h_{clipped}[i] * \frac{1}{M} * N_b$$

In this formula, $I'[x][y]$ represents output pixel value, $I[x][y]$ represents input pixel value, x and y represents pixel coordinates, $h_{clipped}[i]$ represents clipped histogram, M represents total number of pixels in the window, i represents input pixel value and lower values, and $N_b$ represents the maximum element number a pixel can have. Each pixel with 8-bit resolution has values in the range of 0 to 255, therefore, Nb is 256 at maximum.

Due to the method according to the invention, a pixel-specific clipping level parameter is calculated according to edge information around each pixel for the real-time sliding window CLAHE algorithm.

In high-frequency areas with edge information in the image, increasing the clipping level in the regions within the window increases contrast and improves the viewing. In low-frequency areas where there is no edge information in the image, the amount of edge remaining in the window is low, so a low clipping level is applied so that the contrast in those areas does not reveal noise.

**Claims**

1.   A computer-implemented method increasing contrast for the real time sliding window CLAHE algorithm **comprising** the following process steps;

   • calculating of the histogram of pixels in the surrounding window for each pixel,
   • calculation of the clipping level value for each pixel separately with the following processing steps:

      ◦ determining an edge threshold, minimum clip and clip alpha parameters by the user,
      ◦ obtaining high-frequency parts of the image via a filter,
      ◦ comparing the edge threshold and the high frequency information obtained from the filter by a comparator, and consequently converting the image into a binary image,
      ◦ obtaining the total number of 1's in the NxN window around each pixel in the resulting binary image via the following process steps applied to the binary image:

         ▪ collecting of all the pixels in the window

■ adding the sum of each column entering the sliding window to the current total, and

■ subtracting the sum of each column out of the sliding window from the current total,

◦ calculating the edge density by obtaining the ratio of the total number of 1 to the number of pixels in the window,

◦ adding the minimum clip value to the value obtained by multiplying the clip alpha value with the edge density,

• parts of the histogram that exceed the clipping level are clipped from the clipping level, and pixels above the clipping level are evenly redistributed to each element of the histogram,

• calculation of cumulative histogram over the clipped and redistributed histogram,

• obtaining the transfer function by multiplying the ratio of the cumulative histogram to the total number of pixels in the window by the maximum pixel value, and

• obtaining the output pixel value corresponding to the input pixel value via the transfer function.

2. The method according to Claim 1, **characterized in that**; sobel filter is used for obtaining the high-frequency parts of the image.

**Patentansprüche**

1. Computerimplementiertes Verfahren, das Kontrast für den Echtzeit-Gleitfenster-CLAHE-Algorithmus erhöht, **umfassend** die folgenden Prozessschritte:

• Berechnen des Histogramms von Pixeln in dem umgebenden Fenster für jedes Pixel,

• Berechnung des Werts der Clipping-Ebene für jedes Pixel separat mit den folgenden Prozessschritten:

◦ Bestimmen einer Kantenschwelle, minimaler Clip- und Clip-Alpha-Parameter durch den Benutzer,

o Erhalten von Hochfrequenzteilen des Bilds über einen Filter,

◦ Vergleichen der Kantenschwelle und der aus dem Filter erhaltenen Hochfrequenzinformationen durch einen Komparator und folglich Umwandeln des Bilds in ein Binärbild,

o Erhalten der Gesamtzahl von 1-en im NxN-Fenster um jedes Pixel in dem resultierenden Binärbild über die folgenden Prozessschritte, die auf das Binärbild angewendet werden:

■ Sammeln aller Pixel in dem Fenster,

■ Addieren der Summe jeder Spalte, die in das Gleitfenster eintritt, zu der aktuellen Summe, und

■ Subtrahieren der Summe jeder Spalte aus dem Gleitfenster von der aktuellen Summe,

◦ Berechnen der Kantendichte durch Erhalten des Verhältnisses der Gesamtanzahl von 1 zu der Anzahl von Pixeln in dem Fenster,

o Addieren des minimalen Clip-Werts zu dem Wert, der durch Multiplizieren des Clip-Alpha-Werts mit der Kantendichte erhalten wird,

• Teile des Histogramms, die die Clipping-Ebene überschreiten, werden von der Clipping-Ebene abgeschnitten und Pixel oberhalb der Clipping-Ebene werden gleichmäßig auf jedes Element des Histogramms umverteilt,

• Berechnung eines kumulativen Histogramms über das abgeschnittene und umverteilte Histogramm,

• Erhalten der Transferfunktion durch Multiplizieren des Verhältnisses des kumulativen Histogramms zu der Gesamtanzahl von Pixeln in dem Fenster mit dem maximalen Pixelwert und

• Erhalten des Ausgabepixelwerts, der dem Eingabepixelwert entspricht, über die Transferfunktion.

2. Verfahren nach Anspruch 1, **dadurch gekennzeichnet, dass**; Sobel-Filter zum Erhalten der Hochfrequenzteile des Bilds verwendet wird.

**Revendications**

1. Procédé mis en œuvre par ordinateur augmentant le contraste pour l'algorithme CLAHE à fenêtre glissante en temps réel **comprenant** les étapes de processus suivantes :

• calcul de l'histogramme de pixels dans la fenêtre environnante pour chaque pixel,

• calcul de la valeur du niveau de découpage pour chaque pixel séparément avec les étapes de traitement suivantes :

○ détermination d'un seuil de bord, de paramètres de découpe minimum et de découpes alpha par l'utilisateur,

○ obtention de parties haute fréquence de l'image par l'intermédiaire d'un filtre,

○ comparaison du seuil de bord et des informations haute fréquence obtenues à partir du filtre par un comparateur, et par conséquent, conversion de l'image en une image binaire,

○ obtention du nombre total de 1 dans la fenêtre N×N autour de chaque pixel de l'image binaire résultante par l'intermédiaire de l'application des étapes de traitement suivantes à l'image binaire :

▪ collecte de tous les pixels dans la fenêtre

▪ addition de la somme de chaque colonne entrant dans la fenêtre glissante au total actuel, et

▪ soustraction de la somme de chaque colonne de la fenêtre glissante du total actuel,

○ calcul de la densité de bord en obtenant le rapport du nombre total de 1 au nombre de pixels dans la fenêtre,

○ addition de la valeur minimale de découpe à la valeur obtenue en multipliant la valeur alpha de découpe par la densité de bord,

• les parties de l'histogramme qui dépassent le niveau de découpage sont découpées à partir du niveau de découpage, et les pixels au-dessus du niveau de découpage sont redistribués uniformément à chaque élément de l'histogramme,

• calcul d'un histogramme cumulé sur l'histogramme découpé et redistribué,

• obtention de la fonction de transfert en multipliant le rapport de l'histogramme cumulatif au nombre total de pixels dans la fenêtre par la valeur maximale de pixel, et

• obtention de la valeur de pixel de sortie correspondant à la valeur de pixel d'entrée par l'intermédiaire de la fonction de transfert.

2. Procédé selon la revendication 1, **caractérisé en ce que** ; un filtre de Sobel est utilisé pour obtenir les parties haute fréquence de l'image.

**Figure 1**

**Figure 2**

Cumulative
distribution function
of the histogram

**Figure 3**

**Figure 4**

**EP 4 091 130 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- IN 2986CHE2013 A
- KR 101684990 B1
- CN 107481202 A